Europäisches Patentamt

European Patent Office

Office européen des brevets

(19)

(11) Veröffentlichungsnummer: **0 280 958 B1**

(12) **EUROPÄISCHE PATENTSCHRIFT**

(45) Veröffentlichungstag der Patentschrift: **25.09.91**

(51) Int. Cl.⁵: **A01C 7/20, A01C 7/08**

(21) Anmeldenummer: **88102258.6**

(22) Anmeldetag: **17.02.88**

(54) **Drillmaschine.**

(30) Priorität: **05.03.87 DE 3707008**

(43) Veröffentlichungstag der Anmeldung:
**07.09.88 Patentblatt 88/36**

(45) Bekanntmachung des Hinweises auf die
Patenterteilung:
**25.09.91 Patentblatt 91/39**

(84) Benannte Vertragsstaaten:
**AT DE ES FR GB IT NL**

(56) Entgegenhaltungen:
**AU-B- 434 865     DE-C- 3 141 078
FR-A- 981 129     GB-A- 2 176 083
US-A- 3 554 409     US-A- 4 466 364**

(73) Patentinhaber: **A.J. Tröster GmbH + Co KG
Kaiserstrasse 9-11
W-6308 Butzbach(DE)**

(72) Erfinder: **Link, Alfred
Alte Brauerei 1
W-6308 Butzbach(DE)**

(74) Vertreter: **Schlagwein, Udo, Dipl.-Ing.
Anwaltsbüro Ruppert & Schlagwein Frankfurter Strasse 34
W-6350 Bad Nauheim(DE)**

**Beschreibung**

Die Erfindung bezieht sich auf eine Drillmaschine, welche zusätzlich zu zwischen ihren Laufrädern angeordneten Säscharen jeweils ein am bodenseitigen Ende eines am Maschinenrahmen befestigten Hebels angebrachtes Säschar mit Spurlockerern hinter jedem Laufrad in der Laufradspur hat, wobei federnde Mittel vorgesehen sind, welche beim Auftreffen auf ein Hindernis ein Hochschwenken des jeweiligen, hinter einem Laufrad angebrachten Säschars nach hinten ermöglichen. Eine solche Drillmaschine ist Gegenstand der DE-PS 31 41 078.

Die Anordnung von jeweils einem Saschar hinter jedem Laufrad ermöglicht es, die volle Breite der Drillmaschine als Arbeitsbreite zu nutzen, ohne daß Saschare seitlich überstehen müssen, was einen Transport auf der Straße ohne Sondergenehmigung ausschließen würde.

Bei der bekannten Drillmaschine ist das jeweils hinter einem Laufrad befindliche Schar als Hackschar ausgebildet und am Ende eines starren, schräg nach unten gerichteten, schwenkar am Maschinenrahmen befestigten Hebels angeordnet. Der Hebel wird mit einer Druckfeder zum Erdboden hin vorgespannt. Ein einstellbarer Anschlag begrenzt die maximal mögliche Schwenkbewegung des Hebels zum Erdboden hin und bestimmt damit die Eindringtiefe des Hackschars.

Nachteilig bei der bekannten Drillmaschine ist es, daß das jeweils hinter einem Laufrad angeordnete Schar relativ weit hinter dem Rad in den Boden eindringt. Dadurch gelangt das Schar beim Durchfahren einer Bodenmulde zunächst unerwünscht tief in den Erdboden hinein und anschließend aus dem Erdboden heraus, wenn es sich im Bereich der Mulde befindet, weil dann das Laufrad vor der Mulde und deshalb höher als der Erdboden in der Mulde ist. Ein weiterer Nachteil der vorbekannten Drillmaschine liegt darin, daß sie sich im nichtbenutzten Zustand zusätzlich zu den Laufrädern auf den Scharen abstützt. Da diese an schräg verlaufenden Hebeln befestigt sind, die gegen Federkraft nach oben schwenken können, steht die Drillmaschine sehr labil.

Durch die FR-A-981 129 ist auch schon ein Säschar bekannt, welches am Ende eines senkrecht ausgerichteten Hebels angeordnet ist, bei dem es sich um eine Schraubenfeder handelt, deren Windungen bei senkrechter Ausrichtung des Hebels aufeinander liegen. Hierdurch ist der Hebel unter vertikaler Belastung starr, kann jedoch beim Auftreffen des Säschars gegen ein Hindernis leicht nach hinten ausweichen. Nachteilig hierbei ist jedoch, daß der als Schraubenfeder ausgebildete Hebel relativ teuer in der Herstellung ist und daß das Schar beim Ausweichen nach hinten zunächst nur sehr langsam an Höhe gewinnt.

Der Erfindung liegt die Aufgabe zugrunde, eine Drillmaschine der eingangs genannten Art derart auszubilden, daß ihre hinter den Laufrädern befindlichen Säschare möglichst konstant tief in den Boden eindringen und daß bei nicht benutzter Drillmaschine diese von den hinter den Laufrädern befindlichen Säscharen möglichst fest abgestützt wird.

Diese Aufgabe wird erfindungsgemäß dadurch gelöst, daß die beiden jeweils ein Säschar hinter einem Laufrad tragenden Hebel als Feder ausgebildet und zumindest annähernd senkrecht hinter den Laufrädern heruntergeführt sind und daß die Hebel zwischen dem Säschar und ihrer Befestigungsstelle eine Federwindung aufweisen, deren Windungsachse horizontal und quer zur Fahrtzichtung der Drillmaschine ausgerichtet ist.

Durch diese zumindest annähernd senkrechte Anordnung der die Säschare tragenden Hebel befindet sich das jeweils von ihnen getragene Säschar unmittelbar hinter dem Laufrad. Dadurch ändert sich beim überfahren von Bodenunebenheiten die Eindringtiefe des Säschars weit weniger als bei der bekannten Drillmaschine, bei der der Abstand des jeweiligen Säschars vom Laufrad wesentlich größer ist. Da dank der Erfindung der jeweils ein Säschar tragende Hebel vertikal verläuft, kann er sehr gut die Funktion einer Abstellstütze übernehmen, so daß die nicht benutzte Drillmaschine auch ohne zusätzliche Stütze kippsicher steht. Ein weiterer Vorteil der erfindungsgemäßen Drillmaschine liegt darin, daß die hinter den Laufrädern befindlichen Säschare Rückstände auf dem Erdboden weniger leicht sammeln als die an schräg verlaufenden Hebeln angeordneten, sogenannten Gänsefußschare gemäß der eingangs genannten DE-PS 31 41 078.

Die Federwindung zwischen dem Säschar und ihrer Befestigungsstelle ermöglicht ein besonders leichtes Wegschwenken nach hinten, wenn das Säschar auf ein Hindernis auffährt, ohne daß dadurch die Steifigkeit in vertikaler Richtung zu gering wird. Da die Federwindung ähnlich wie ein Gelenk wirkt, liegt die Schwenkachse des Säschars relativ weit unten, so daß das Säschar beim Wegschwenken nach hinten rasch an Höhe gewinnt und deshalb rasch vom Hindernis freikommt.

Die Eindringtiefe des Säschars läßt sich auf einfache Weise verstellen, wenn die Hebel in senkrechter Richtung verstellbar am Maschinenrahmen befestigt sind.

Die Säschare hinter den Laufrädern setzen sich nicht mit Erde zu, wenn die Drillmaschine abgesetzt wird, wenn an beiden hinter den Laufrädern vorgesehenen Säscharen jeweils eine durch Schwerkraft vor den Saatgutauslaß schwenkende Klappe angeordnet ist.

Der Spurlockerer kann sehr unterschiedlich gestaltet sein, beispielsweise so, wie in der eingangs genannten DE-PS 31 41 078. Möglich ist es auch, Scheibenschare vorzusehen. Besonders vorteilhaft für eine gleichmäßig gute Saatgutablage ist es jedoch, wenn der Spurlockerer durch eine in den Boden hinein gerichtete Spitze des Säschars gebildet ist.

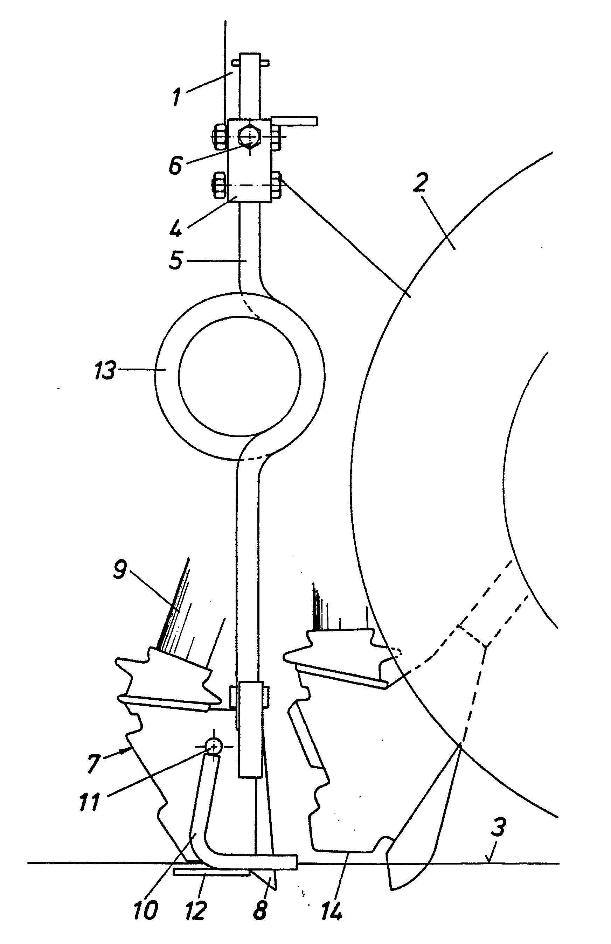

Die Erfindung läßt zahlreiche Ausführungsformen zu. Zu ihrer weiteren Verdeutlichung ist eine davon in der Zeichnung dargestellt und wird nachfolgend beschrieben. Die Zeichnung zeigt eine Ansicht von der Seite auf einen für die Erfindung wesentlichen, rückwärtigen Bereich einer erfindungsgemäß gestalteten Drillmaschine.

In der Zeichnung ist teilweise ein Maschinenrahmen 1 dargestellt, der sich in Betriebsstellung über Laufräder 2 am Erdboden 3 abstützt. Hinter dem Laufrad 2 ist am Maschinenrahmen 1 eine Lasche 4 befestigt, in der ein senkrecht nach unten geführter Hebel 5 aus Federstahl gehalten ist. Nach Lösen einer Klemmschraube 6 kann dieser Hebel 5 mehr oder weniger nach oben oder unten geschoben und dann mittels der Klemmschraube 6 in der gewünschten Höhenlage fixiert werden.

An seinem unteren Ende trägt der Hebel 5 ein Säschar 7, welches mit einer als Spurlockerer ausgebildeten Scharspitze 8 dicht hinter dem Laufrad 2 in den Erdboden 3 dringt. Saatgut gelangt auf übliche Weise aus einem nicht gezeigten Saatgutbehälter über ein Leitungsrohr 9 zum Säschar 7.

Am Säschar 7 ist eine Klappe 10 derart um eine Achse 11 schwenkbar angeordnet, daß sich diese Klappe 10 bei angehobener Drillmaschine mit einer Platte 12 vor den Saatgutauslaß schwenkt. Dadurch wird verhindert, daß das Säschar 7 bei nicht benutzter Drillmaschine unerwünscht weit in den Boden sinkt und dadurch verstopfen kann.

Um es dem Säschar 7 zu ermöglichen, beim Auflaufen gegen ein Hindernis nach hinten und damit zugleich nach oben ausreichend leicht auszuweichen, ist der aus Federstahl bestehende Hebel 5 mit einer Federwindung 13 versehen. üblicherweise wird eine einfache Windung ausreichend sein.

Strichpunktiert dargestellt ist in der Zeichnung räumlich vor dem Säschar 7 ein Säschar 14 einer Reihe von Säscharen, welche sich zwischen den Laufrädern 2 befinden, so daß bei ihnen nicht das Problem des Verfestigens des Bodens durch die Laufräder eintritt.

Auflistung der verwendeten Bezugszeichen

| | |
|---|---|
| 1 | Maschinenrahmen |
| 2 | Laufrad |
| 3 | Erdboden |
| 4 | Lasche |
| 5 | Hebel |
| 6 | Klemmschraube |
| 7 | Säschar |
| 8 | Scharspitze |
| 9 | Leitungsrohr |
| 10 | Klappe |
| 11 | Achse |
| 12 | Platte |
| 13 | Federwindung |
| 14 | Säschar |

## Patentansprüche

1. Drillmaschine, welche zusätzlich zu zwischen ihren Laufrädern (2) angeordneten Säscharen jeweils ein am bodenseitigen Ende eines am Maschinenrahmen (1) befestigten Hebels (5) angebrachtes Säschar (7) mit Spurlockerer hinter jedem Laufrad (2) in der Laufradspur hat, wobei federnde Mittel vorgesehen sind, welche beim Auftreffen auf ein Hindernis ein Hochschwenken des jeweiligen, hinter einem Laufrad (2) angebrachten Säschars (7) nach hinten ermöglichen, dadurch gekennzeichnet, daß die beiden jeweils ein Säschar (7) hinter einem Laufrad (2) tragenden Hebel (5) als Feder ausgebildet und zumindest annähernd senkrecht hinter den Laufrädern (2) heruntergeführt sind und daß die Hebel (5) zwischen dem Säschar (7) und ihrer Befestigungsstelle eine Federwindung (13) aufweisen, deren Windungsachse horizontal und quer zur Fahrtzichtung der Drillmaschine ausgerichtet ist.

2. Drillmaschine nach Anspruch 1, dadurch gekennzeichnet, daß die Hebel (5) in senkrechter Richtung verstellbar am Maschinenrahmen (1) befestigt sind.

3. Drillmaschine nach den Ansprüchen 1 oder 2, dadurch gekennzeichnet, daß an beiden hinter den Laufrädern (2) vorgesehenen Säscharen (7) jeweils eine durch Schwerkraft vor den Saatgutauslaß schwenkende Klappe (10) angeordnet ist.

4. Drillmaschine nach einem oder mehreren der vorangehenden Ansprüche, dadurch gekennzeichnet, daß der Spur lockerer durch eine in den Erdboden (3) hinein gerichtete Scharspitze (8) des Säschars (7) gebildet ist.

5. Drillmaschine nach einem oder mehreren der vorangehenden Ansprüche, dadurch gekennzeichnet, daß der Spurlockerer als Scheibe ausgebildet ist.

## Claims

1. Row-seeder which in addition to seeding coulters arranged between its wheels (2) has a seeding coulter (7) with a track loosener behind each wheel (2) in the track of the wheel at the ground side end of a lever (5) which is secured to the machine frame (1), whereby spring means are provided which enable the respective seeding coulter (7) behind a wheel (2) to be swung up to the back on striking an obstacle, characterized in that both of the levers (5) each bearing a seeding coulter (7) behind a wheel (2) are springs and are led down at least approximately vertically behind the wheels (2) and that the levers (5) have a spring coil (13) between the seeding coulter (7) and the place where the levers (5) are secured, the axis of the turn on the spring coil (13) being horizontal and transverse to the direction of travel of the row-seeder.

2. Row-seeder according to claim 1, characterized in that the levers (5) are secured to the machine frame (1) so as to be adjustable in vertical direction.

3. Row-seeder according to claim 1 or 2, characterized in that on both of the seeding coulters (7) provided behind the wheels (2) there is a flap (10) which swings due to gravitational force in front of the outlet for the seeds.

4. Row-seeder according to one or more of the previous claims, characterized in that the track loosener is one of the points of the seeding coulter (7) which is directed into the earth (3).

5. Row-seeder according to one or more of the previous claims, characterized in that the track loosener is a disc.

**Revendications**

1. Semoir en lignes qui comporte, en plus des socs de semoir disposés entre ses roues de roulement (2), un soc de semoir (7) avec effaceur de traces de roue derrière chaque roue, dans la trace de roue, monté sur l'extrémité du côté du sol d'un levier (5) fixé sur le cadre de machine (1), des moyens à ressorts étant prévus lesquels permettent un pivotement vers le haut et l'arrière de chacun des socs de semoir (7) monté derrière une roue (2) lorsqu'il rencontre un obstacle caractérisé en ce que les deux leviers (5) portant chacun un soc de semoir (7) derrière une roue (2) sont réalisés sous forme de ressort et sont guidés au moins approximativement verticalement vers le bas derrière les roues (2) et les leviers (5) comportent entre le soc de semoir (7) et leur emplacement de fixation une ou des spires de ressort (13) dont l'axe est dirigé horizontalement et transversalement à la direction de marche.

2. Semoir en lignes selon la revendication 1 caractérisé en ce que les leviers (5) sont fixés de manière verticalement réglable sur le cadre de machine (1).

3. Semoir en lignes selon les revendications 1 ou 2 caractérisé en ce que sur les deux socs de semoir prévus derrière les roues (2) est disposé chaque fois un volet (10) pivotant par gravité devant la sortie de semences.

4. Semoir en lignes selon une ou plusieurs des revendications précédentes caractérisé en ce que l'effaceur de traces de roue est formé par une pointe (8) du soc de semoir (7) dirigée dans le sol (3).

5. Semoir en lignes sel on une ou plusieurs des revendications précédentes caractérisé en ce que l'effaceur de traces de roue est réalisé sous forme de disque.